# EUROPÄISCHE PATENTSCHRIFT

(11) **EP 1 030 965 B1**
(45) Veröffentlichungstag und Bekanntmachung des Hinweises auf die Patenterteilung: **03.03.2004**
(21) Anmeldenummer: 98961187.6
(22) Anmeldetag: 12.11.1998
(51) Int. Cl.: F02M 35/12, F16L 55/033

(54) **GASDURCHSTRÖMTE LEITUNG MIT SCHALLABSORPTIONSWIRKUNG**
CROSS-FLOWN GAS LINE WITH A SOUND ABSORBENT EFFECT
CONDUITE PARCOURUE PAR DES GAZ, A EFFET D'ABSORPTION DES SONS

(30) Priorität: 12.11.1997 DE 19750102
(43) Veröffentlichungstag der Anmeldung: 30.08.2000
(60) Teilanmeldung: 03021019.9
(73) Patentinhaber: Stankiewicz GmbH, D-29352 Adelheidsdorf (DE)
(72) Erfinder: GERSTNER, Ralph, D-30173 Hannover (DE); KUTTER-SCHRADER, Hans, D-30916 Isernhagen (DE)
(74) Vertreter: Melzer, Wolfgang, Dipl.-Ing.
(86) Internationale Anmeldenummer: PCT/EP1998/007245
(87) Internationale Veröffentlichungsnummer: WO 1999/024708

(56) Entgegenhaltungen:
- EP-A- 0 360 044
- WO-A-97/09527
- DE-A- 4 433 021
- DE-A- 19 504 223
- DE-A- 19 615 917
- DE-U- 9 015 414
- FR-A- 2 743 848

## Beschreibung

Die vorliegende Erfindung bezieht sich auf eine gasdurchströmte Leitung mit Schallabsorptionswirkung. Die Erfindung bezieht sich insbesondere auf luftdurchströmte Rohrleitungen mit Schallabsorptionswirkung.

Als Möglichkeit der Schallabsorption sind sogenannte Helmholtz-Absorber bekannt, die aber je nach geometrischer Ausführung nur für eng begrenzte Frequenzbereiche eine gute Absorptionswirkung zeigen. Darüber hinaus weisen Helmholtz-Absorber üblicherweise verhältnismäßig große Abmessungen auf, was ihren Verwendungbereich stark einschränkt.

Weiterhin sind Schallabsorptionsvorrichtungen aus faserigen und porösen Materialien bekannt, die indessen eine Anzahl an Nachteilen aufweisen. Einerseits ist die häufig heterogene Materialmischung dieser Systeme recycling-unfreundlich. Darüber hinaus können sich aus diesen Materialien Partikeln ablösen, so daß diese Systeme nicht für luftführende Leitungen geeignet sind. Darüber hinaus leiden die porösen Materialien darunter, daß sie eine starke Wasseraufnahme zeigen.

Als weitere Möglichkeit der Schallabsorption sind vor einer starren, d.h. schallharten, Wand angeordnete sogenannte mikroperforierte Plattenabsorber bekannt. Der physikalische Hintergrund dieser Art von Schallabsorbern ist in der IBP-Mitteilung 261-21 (1994), "Neue Forschungsergebnisse - kurzgefaßt" des Fraunhofer-Instituts für Bauphysik beschrieben. Der Absorptionseffekt bei diesen Schallabsorbern beruht im wesentlichen auf der viskosen Reibung, die bspw. durchströmende Luft in den Löchern der Mikroperforation zu überwinden hat.

Aus der DE 4315759 C1 ist ein schallabsorbierendes Glas oder transparentes Kunstglasbauteil bekannt, das durchgehende Löcher mit einem sehr kleinem Durchmesser im Bereich von 0,2 bis 2 mm aufweist und das auf Abstand vor einer starren Rückwand befestigt wird. Das schallabsorbierende Bauteil ist plattenförmig ausgeführt mit verschiedenen Formgebungen wie z. B. konkav oder konvex bezüglich der Rückwand, oder auch dachförmig. Der Vorteil dieser Elemente besteht u.a. darin, daß sie durchsichtig sind und auch in Feuchträumen verwendet werden können. Weiterhin können sie selbst Designelemente für verschiedene Räume darstellen.

DE 4433021 A1 zeigt zur Vermeidung von mechanischen Schwingungen verursachenden Verwirbelungen in einer Rohrleitung eine weitere Leitung mit Perforationen mit einem Durchmesser von 2 mm und einem Durchmesser von 2 mm und einem Lochabstand von 4 mm. Schallabsorption ist nicht angesprochen.

EP 0360044 A1 zeigt ein schalldämmendes Luftführungselement, bei dem die Leitung durch ein gewelltes Rohr gebildet ist. Die Wellenspitzen sind aussenseitig von einem Schallschluckmaterial, bestehend aus einem offenporigen Schaum aus polymerem Material, das zweckmässig verhärtet ist, umgeben. In die Zwischenräume zwischen dem Schallschluckmaterial und den Wellentälern münden an den Wellenspitzen vorgesehene Perforierungen mit einem Öffnungsgrad zwischen 5 und 75 %. Die Schallabsorptionswirkung beruht daher im wesentlichen auf dem Schallschluckmaterial.

DE 19615917 A1 zeigt einen in einer Kammer angeordneten Ansaugsschalldämpfer mit in die Kammer mündenden Öffnungen. Öffnungsfläche und Wandstärke bestimmen die Abstimmung auf bestimmte Frequenzen.

DE 19504223 zeigt Rohrleitungen, die von einem Ringsaum umgeben sind, in die Öffnungen münden. Ähnlich zeigt FR 2743848 A1 wobei zur Bestimmung der Öffnungsfläche zwei jeweils Öffnungen aufweisende Wandschichtteile gegeneinander verschiebbar sind.

Die aus dem Stand der Technik bekannten mikroperforierten Absorber haben den Nachteil, daß sie als relativ großflächige Platten im Abstand von einer starren Rückwand eingesetzt werden müssen und somit nicht geeignet sind, komplizierteren Konturen zu folgen. Darüber hinaus erhöht sich der Platzbedarf der Gesamtanordnung.

Aufgabe der vorliegenden Erfindung ist es daher, eine Schallabsorptionsanordnung zu schaffen, die einen geringen Platzbedarf aufweist.

Gemäß der vorliegenden Erfindung ist daher eine gasdurchströmte Leitung mit Schallabsorptionswirkung vorgesehen mit der Merkmalen der Anspruchs 1.

Die Erfindung wird durch die Merkmale der abhängigen Ansprüche weitersgebildet.

Durch Ausbilden der Wand der Leitung mittels mindestens zweier perforierter Wandschichtteile, die gegeneinander verschiebbar sind, kann die wirksame Öffnungsfläche der Perforierung einstellbar gestaltet werden.

Die vorliegende Erfindung bezieht sich weiterhin auf ein Verfahren zur Herstellung der Leitung der oben genannten Art, wobei das Verfahren den Schritt der Herstellung der Mikroperforationen durch Stanzen (und somit mechanisch) und/oder durch Bearbeitung mit einem Laserstrahl aufweist.

Die Erfindung wird nun anhand von Ausführungsbeispielen und bezugnehmend auf die begleitenden Zeichnungen näher erläutert. Es zeigen:
- Fig. 1: eine Gesamtansicht einer erfindungsgemäßen gasführenden Leitung mit Schallabsorptionswirkung;
- Fig. 2: eine Querschnittsansicht eines Ausschnitts aus der Wand der gasführenden Leitung von Fig. 1;
- Fig. 3: eine Ansicht ähnlich der von Fig. 2 gemäß einem weiteren Ausführungsbeispiel;
- Fig. 4: graphisch das Einfügungsdämmaß (Einfügungsdämmung) einer erfindungsgemäßen gasführenden Leitung im Vergleich zu einem typischen Resonanzabsorber;
- Fig. 5: eine weitere Graphik, die die sogenannte Einfügungsdämmung einer erfindungsgemäßen Rohrleitung abhängig von der zu dämmenden Frequenz darstellt;
- Fig. 6: eine rohrförmige Ausführung einer erfindungsgemäßen Leitung mit Ummantelung,
- Fig. 7: eine Weiterbildung der Ausführung gemäß Fig. 6 mit einer in kassettenartige Abschnitte aufgeteilten Ummantelung,
- Fig. 8: eine Weiterbildung der Ausführungsform gemäß Fig. 7 mit unterschiedlichen Lochflächenmaßen,
- Fig. 9: eine graphische Darstellung des Artikulationsindex bei nur über eine Teilfläche vorgesehenem flächigen Absorber mit Mikroperforationen,
- Fig. 10: schematisch im Teilschnitt und perspektivisch eine Anordnung einer im Vergleich zu einer Rohrleitung willkürlich verlaufenden Wand einer Leitung mit konturfolgender Ummantelung und unterschiedlich ausgebildeten Perforationen,
- Fig. 11: schematisch eine Anordnung, bei der eine Wand durch Wandschichtteile gebildet ist.

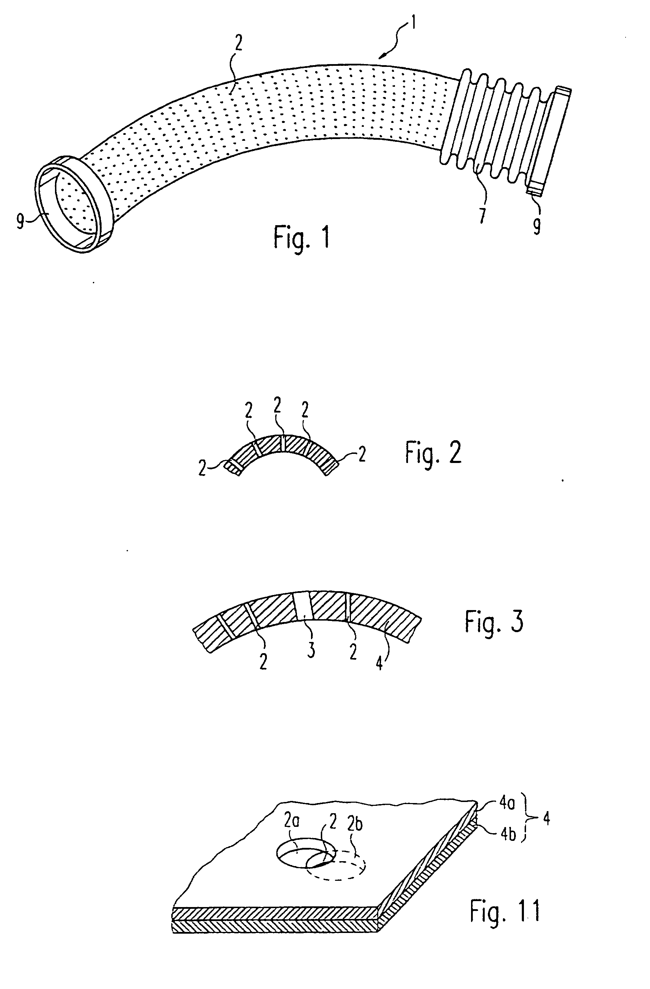

In Fig. 1 ist als erstes Ausführungsbeispiel der Erfindung die Anwendung der vorliegenden Erfindung auf einem Ansaugschlauch 1 eines (nicht dargestellten) Verbrennungsmotors dargestellt. Dieser rohrförmige Absorber kann beispielsweise im Bereich sensibler Motoraggregate eingesetzt werden, wie beispielsweise als Ansaugschlauch eines Turboladers. Turbolader strahlen sehr hochfrequente Geräusche mit Frequenzen von mehr als 1 kHz ab und sind darüber hinaus mechanisch so empfindlich, daß eventuelle auf dem Weg der Luftansaugung abgelöste Partikel zu ernsthaften mechanischen Beschädigungen führen können. Die vorliegende Erfindung läßt sich auch auf andere Luftführungen, wie beispielsweise Kühlluftführungen im Motorraum eines Fahrzeugs anwenden, bei denen Frequenzen von weniger als 1 KHz den abgestrahlten Schallpegel dominierend bestimmen. Allgemein steht bei diesen Anwendungen nur wenig Platz für schalldämmende oder schallabsorbierende Vorrichtungen zur Verfügung.

Wie ersichtlich, sind die Mikroperforierungen 2, die die Schallabsorption zur Folge haben, in der Wand der luftdurchströmten Leitung 1 selbst vorgesehen. Gegenüber einer herkömmlichen Leitung ohne Schallabsorptions-Wirkung sind also keine zusätzlichen Vorrichtungen erforderlich, so daß der Platzbedarf z.B. durch Zusatzlängen oder größere Durchmesser im Gegensatz zu den bekannten Schallabsorptions-Vorrichtungen nicht zunimmt.

Wie in Fig. 1 dargestellt, weist der Ansaugschlauch (Rohrleitung) 1 Mikroperforierungen 2 auf, die durch die Wand 4 des Ansaugschlauchs 1 hindurchgehen. Unter Mikroperforierungen sind Löcher mit einem Durchmesser von weniger als 1-2 mm zu verstehen. Durch Vorsehen der Mikroperforierungen 2 kann ein Luftschallabsorptionsgrad → von bis zu 1 für einen Frequenzbereich von > 1 kHz erreicht werden, obwohl die Bauhöhe, Rohrlänge und Flächenabmessung der Leitung gering gehalten werden kann. Gemäß einem bevorzugten Ausführungsbeispiel weist die Rohrleitung 1 im wesentlichen kreisförmige, durch sie hindurchgehende Löcher 2 mit einem Durchmesser von etwa 0,45 mm auf. Gemäß der Erfindung müssen die Löcher nicht ausschließlich kreisförmige Durchmesser haben, es eignen sich vielmehr nahezu beliebige geometrische Formen wie beispielsweise Schlitze. Die freie Lochfläche sollte indessen unabhängig von der geometrischen Ausführung einen Anteil von max. 10 % der Gesamtfläche aufweisen.

In Fig. 2 ist gezeigt, wie Mikroperforierungen 2 mit im wesentlichen gleichen Durchmesser durch die Wand 4 der Rohrleitung 1 hindurchgehen.

Wie in Fig. 3 zu sehen, kann neben den Mikroperforierungen 2 auch wenigstens ein größeres Loch 3 vorgesehen sein. Diese größeren Löcher 3 weisen vorzugsweise einen Durchmesser von wesentlich mehr als dem der Mikroperforierungen 2, aber kleiner als 5 mm auf. Die Kombination der Mikroperforierungen 2 mit den größeren Löchern 3, deren Durchmesser kleiner ist als bei bekannten Helmholtz-Absorbern, kann eine deutliche Erweiterung des abdämmbaren Frequenzbandes hin zu tiefen Frequenzen bis zu etwa 500 Hz erreicht werden.

In der Fachliteratur wurde oft ausgeführt, daß feinperforierte Absorber plattenförmig ausgeführt und auf Abstand vor eine starre Rückwand gesetzt werden müssen. Weiterhin wurde vielfach die Ansicht geäußert, daß sich feine bzw. Mikroperforationen sehr schnell zusetzen und der Schallabsorber dadurch unwirksam werden würde. Indessen wurde, wie später bezugnehmend auf Fig: 4 und 5 dargestellt werden wird, bei der Erfindung festgestellt, daß der Absorptionseffekt bei einer erfindungsgemäßen Leitung relativ unabhängig vom Prozentsatz der zugesetzten Löcher ist, wobei natürlich nicht alle Löcher verschlossen sein dürfen.

Dies ist darauf zurückzuführen, daß die schallabsorbierende Wirkung gemäß der Erfindung auf Turbulenzströmungen zurückzuführen ist, die im Bereich der Löcher 2 bestehen. Durch Löcher von weniger als 1 mm läßt sich erreichen, daß in den Löchern so viel viskose Reibung zu überwinden ist, daß keine additive Absorption mehr nötig ist. Die turbulenten Strömungen im Bereich der Löcher 2 und 4 absorbieren also die Schallenergie.

Die vorliegende Erfindung findet insbesondere im Fahrzeugbereich wie bereits oben erläutert Anwendung, da sie keiner großflächigen Ausdehnungen bedarf und gleichzeitig aus abriebfesten Materialien besteht, so daß bei luftführenden Leitungen keine Gefahr für nachgeschaltete Aggregate durch Partikelablösungen besteht.

Als Material für die erfindungsgemäße Leitung eignen sich einerseits Polymer-Kunststoffe, wie beispielsweise PMMA, Gummi oder gummiähnliche Materialien oder andererseits Naturprodukte. Als Materialien eignen sich darüber hinaus alle Stoffe, ob durchsichtig oder nicht, die abriebfeste Oberflächen haben, so daß keine Partikelablösungen vorkommen können.

Bei einem Vorschalten einer erfindungsgemäßen gasdurchströmten Leitung 1 vor einen Turbolader kann somit dessen äußerst störendes hochfrequentes Laderpfeifen vermindert werden. Vorteilhafterweise erfolgt gemäß der Erfindung keine Veränderung des Innenquerschnitts der Leitung, wodurch die angesaugte Luftmenge nicht verändert wird. Weiterhin wird die konstruktiv vorgegebene Länge des Luftansaugeschlauchs nicht verändert.

Neben der Anwendung im Motorraum eines Fahrzeugs eignet sich die vorliegende Erfindung in konturfolgender, flächiger Ausführung auch für Türverkleidungen und sogenannte Dachabsorber in Fahrzeuginnenräumen (Fahrgasträumen) sowie zur Verwendung als Motorhaubenabsorber. Von Vorteil ist dabei, daß die erfindungsgemäße Vorrichtung wahlweise transparent oder nicht-transparent ausgeführt werden kann, was beispielsweise im Zusammenspiel mit einer beliebigen Mischung aus kreis- und schlitzförmigen Löchern hinsichtlich des Designs viele Möglichkeiten offen läßt.

Die Löcher können entweder mechanisch, beispielsweise durch Stanzen, und/oder durch Einsatz von Laserstrahlen erzeugt werden.

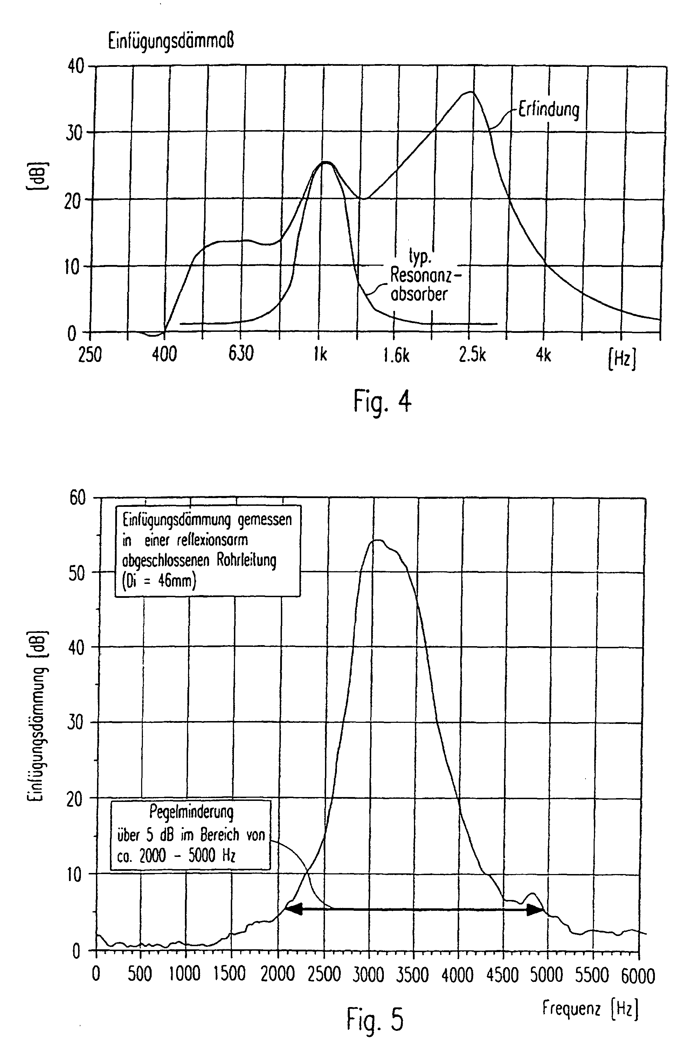

Die Wirkung der erfindungsgemäßen gasdurchströmten Leitung hinsichtlich ihrer Schallabsorption wird nun bezugnehmend auf Fig. 4 und 5 erläutert.

In Fig. 4 ist die sogenannte Einfügungsdämmung in Dezibel (dB) abhängig von der Frequenz des Schalls einerseits für eine erfindungsgemäße Vorrichtung und andererseits für einen bekannten Resonanzabsorber dargestellt. Unter Einfügungsdämmung ist dabei die Differenz zwischen der lauteren und der leiseren Öffnung einer Rohrleitung zu verstehen. In dem in Fig. 4 dargestellten Beispiel ist zu sehen, daß die Dämmwirkung einer erfindungsgemäßen gasdurchströmten Leitung wesentlich breitbandiger als die typische Resonanzkurve eines Resonanzabsorbers wie beispielsweise vom Helmholtz-Typ ist. Wie in Fig. 4 zu sehen, kann erfindungsgemäß eine Einfügungsdämmung von mehr als 10 Dezibel in einem Bereich von etwa 500 Hz bis etwa 4 KHz erreicht werden. Im Vergleich zu Resonanz-Absorbern ist die erfindungsgemäße schallabsorbierende Leitung in ihrer Wirkung also wesentlich breitbandiger.

Fig. 5 zeigt Meßergebnisse der Einfügungsdämmung, wie sie an einer reflexionsarm abgeschlossenen Rohrleitung mit einem Innendurchmesser von 46 mm gemäß der Erfindung erhalten wurden. Wie in Fig. 5 zu ersehen, liegt eine Pegelminderung der Einfügungsdämmung von mehr als 5 Dezibel in einem Bereich von etwa 2000 bis 5000 Hz vor.

Eine Abstimmung der zu absorbierenden Frequenzen kann beispielsweise durch Veränderung des Durchmessers der Mikroperforationen erreicht werden, wobei vergrößterte Löcher die Absorptionswirkung zu tieferen Frequenzen verschieben.

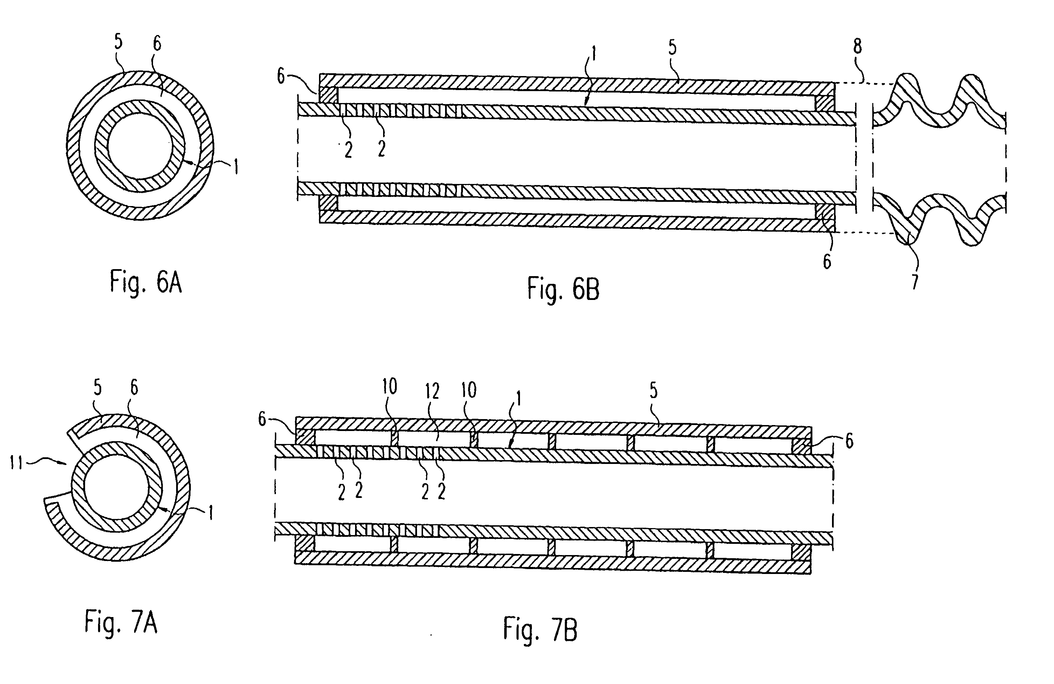

Fig. 6 zeigt eine schlauch- bzw. rohrförmige Ausbildung einer Leitung 1 mit Mikroperforierungen 2 über zumindest einen Längsabschnitt. Die Leitung 1, beispielsweise der Ansaugschlauch gemäß Fig. 1, ist abschnittsweise von einer Ummantelung 5 umgeben, die sich über Abstützungen 6 an der Leitung 1 abstützt. Wie bereits in Fig. 1 angedeutet, weist der dortige Ansaugschlauch 1 endseitig mindestens einen Faltenbalg 7abschnitt auf sowie Montagetlanschen 9. Fig.6 insbesondere Fig. 6B zeigt, daß die Außenabmessung der Ummantelung 5, die durch eine Strichlinie 8 dargestellt ist, in ihrer Außenkontur nicht über die Außenabmessungen des Faltenbalgabschnitts 7 hinausragt, sodaß insgesamt kein größerer Platzbedarf erforderlich ist. Fig. 7 zeigt in Anlehnung an Fig. 6 eine Ausführungform, bei der der innerhalb der Ummantelung 5 gebildete Raum mit Hilfe von Kassetten-Trennwänden 10 kassettenartig unterteilt ist.

Fig. 7, dort Fig. 7A, zeigt ferner, daß die Ummantelung 5 sich nicht vollständig über den Gesamtumfang einer schlauch- oder rohrartigen Leitung erstrecken muß, sondern auch in Längsrichtung ummantelungsfreie Zonen 11 aufweisen kann. Fig. 7B zeigt, daß die Mikroperforierungen nicht notwendigerweise in einen oder alle der kassettenartigen Abschnitte 12 münden müssen.

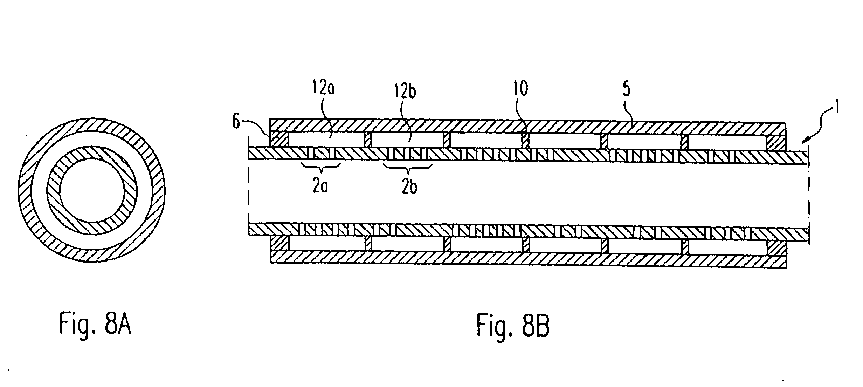

Fig. 8 zeigt schematisch eine Weiterbildung der Ausführungsform gemäß Fig. 7, bei der in die einzelnen kassettenartige Abschnitte 12a, 12b,.. jeweils sehr unterschiedliche Anzahlen von Mikroperforationen 2a, 2b,.. münden, sodaß sich über die Längserstreckung der Leitung 1 sehr unterschiedliche Lochflächenmaße ergeben.

Mit Hilfe der Ummantelungen 5, von denen bei einer Leitung 1 selbstverständlich mehrere vorgesehen sein können, der Bildung von kassettenartigen Abschnitten 12 durch die Trennwände 10 sowie der anhand Fig. 8 erläuterten unterschiedlichen Lochflächenmaßen, dem Anteil gelochter Fläche zur Gesamtfläche, läßt sich die gasdurchströmte Leitung in ihrem Luftschallabsorptionsverhalten auf die jeweilige akustische Problemstellung optimal abstimmen.

Bei der Anwendung auf ein Laderohr, das zwei Faltenbalgabschnitte 7 und ein dazwischen angeordnetes Rohrstück 1 besitzt, ist die Rohrlänge des Laderohrs unverändert und ist auch der Innendurchmesser unverändert, wodurch auch die angesaugte Luftmenge unverändert ist. Durch die in ihren Außenabmessungen wie oben erläutert ausgebildete Ummantelung, die nicht über den Faltenbalgdurchmesser hinausgeht, ist auch kein zusätzlicher Platzbedarf gegeben.

Jedoch wird erreicht, daß die Mikroperforationen 2 nicht von außen zugesetzt werden können. Durch das weiter oben erläuterte Material können sie auch vorteilhaft nicht von innen zugesetzt werden. Selbst wenn wie oben ausgeführt der Absorptionseffekt bei einer erfindungsgemäßen Leitung 1 relativ unabhängig vom Prozentsatz der zugesetzten Mikroperforierungen 2 ist, stellt die Ummantelung 5 jedoch auf jeden Fall in dieser Hinsicht eine Verbesserung dar.

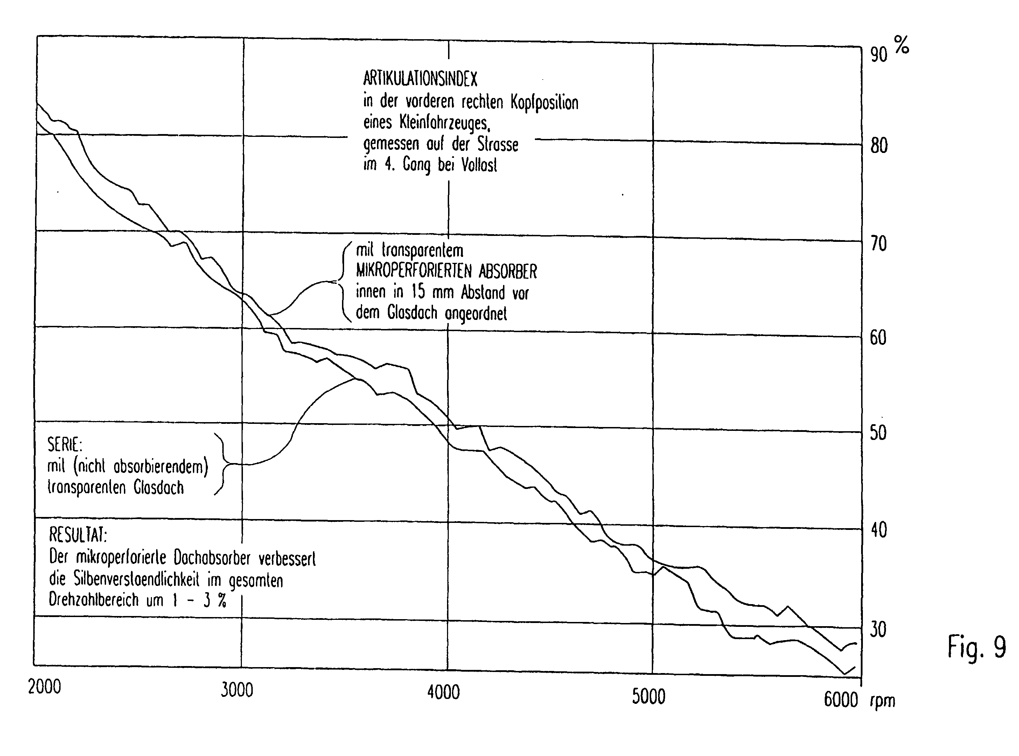

Weiter oben wurde erläutert, daß der Begriff der gasdurchströmten Leitung 1 großzügig auszulegen ist, und daß bei einer solchen gasdurchströmten Leitung 1 die Mikroperforierungen 2 auch nur an bestimmten Stellen vorgesehen sein können. Ein Beispiel einer solchen weiteren Anwendung ist ein Fahrgastraum eines Fahrzeugs mit einem lichtdurchlässigen Glasdach. Mikroperforierungen in einem solchen Glasdach, mit oder ohne einer konturfolgenden Ummantelung, also einer außenseitigen, keine Perforierungen aufweisenden Fläche, vermögen bei diesem Anwendungsfall die Sprachverständigung erheblich zu verbessern. Fig. 9 zeigt Meßergebnisse bei einem solchen Anwendungsfall. Fig. 9 zeigt der Artikulationsindex AI in Abhängigkeit von der Drehzahl bei dem transparenten Glasdach, einmal ohne und einmal mit der erfindungsgemäßen Ausbildung, nämlich mit mikroperforiertem Absorber und davon beabstandeter Ummantelung in Form eines loch- bzw. perforationslosem Glasdachs. Der Artikulationsindex AI, häufig auch als Silbenverständlichkeit bezeichnet, beschreibt den Geräuschkomfort durch Vergleich einer sogenannten Sprachfläche, die nach Frequenz und Dynamik definiert ist, im Verhältnis zu einem gemessenen Motorspektrum. Niedrige Werte des Artikulationsindex bedeuten, daß eine sprachliche Verständigung im gemessenen Fahrzeug schlecht möglich ist, während hohe Werte bedeuten, daß das Motorgeräusch die Sprachverständigung nicht nennenswert zu stören vermag. Die Darstellung gemäß Fig. 9 zeigt die deutliche Verbesserung.

Vergleichbare Ergebnisse werden erzielt, wenn eine störende Schallquelle in erfindungsgemäßer Weise in ihrem Schallabsorptionsverhalten gändert wird, etwa das Laderohr eines Motors, wobei hier auf die Ausführungen zu den graphischen Darstellungen gemäß Fig. 4 und Fig. 5 verwiesen werden kann.

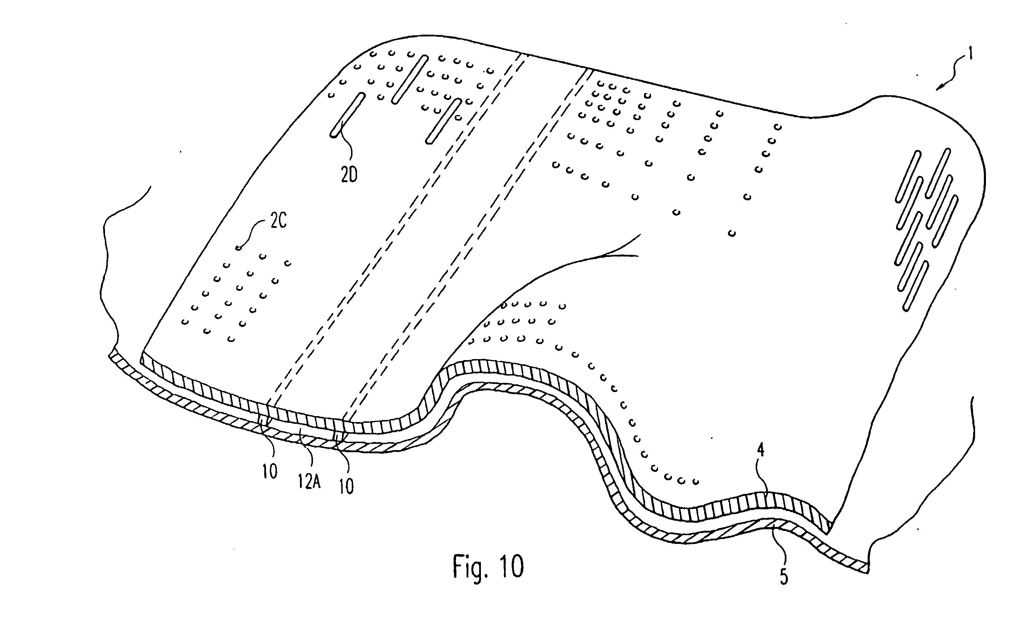

Die vorstehenden Erläuterungen zeigen, daß die Erfindung nicht nur auf schlauch- bzw. rohrartige gasdurchströmte Leitungen angewendet werden kann, sondern auch auf Anordnungen beliebiger Kontur. Fig. 10 zeigt als Beispiel schematisch, daß die Wand 4 einer Rohrleitung im Sinne der vorliegenden Erfindung beliebigen Konturverlauf besitzen kann. Fig. 10 zeigt auch, daß die Mikroperforierungen 2 beliebigen Konturverlauf haben können, etwa in Form von kreisrunden Mikrobohrungen 2C oder Schlitzen 2D, wobei eine Mischung oder eine abschnittsweise Häufung bestimmter Arten dieser Mikroperforierungen 2 vorgesehen sein kann.

Fig. 10 zeigt ferner, daß die Ummantelung mit Abstützungen oder Kassettierungs-Trennwänden 10 konturfolgend sein kann, wobei sich zeigt, daß durchaus bestimmte kassettenartige Abschnitte, etwa der kassettenartigen Abschnitt 12A, keine Mikroperforierungen im zugehörigen Abschnitt der Wand 4 aufweisen muß.

Dies zeigt, daß die erfindungsgemäße Ausbildung nicht nur zur Schallabsorption, sondern darüber hinaus auch ohne Beeinträchtigung der schalltechnischen Wirkung als Designelement herangezogen werden kann, beispielsweise in dem Fahrgastraum eines Kraftfahrzeugs.

Anhand Fig. 11 wird eine Ausführungsform erläutert, die aus FR-A-2 743 848 bekannt ist, wie eine Mikroperforierung 2 in einer Wand 4 gebildet werden kann. Die Wand 4 besteht aus mindestens zwei aufeinandergeschichteten Wandschichtteilen 4a, 4b, die Perforierungen 2a bzw. 2b aufweisen. Durch geeignete Lagejustierung der Wandschichtteile 4a, 4b gegeneinander ist eine Mikroperforierung 2 einer außerordentlich kleiner Durchgangsfläche möglich, selbst wenn die Öffnungen 2a und 2b in den Wandschichtteilen 4a, 4b selbst deutlich größere Öffnungsfläche besitzen.

Durch Verstellen der beiden Wandschichtteile 4a, 4b gegeneinander ist die Öffnungsfläche der Mikroperforierung 2 einstellbar. Die Perforierungen 2a, 2b können dabei in kostengünstiger Weise etwa durch Stanzen hergestellt werden. Bei kreisrunden Perforationen 2a, 2b hat die Mikroperforation 2 etwa ellipsen- bzw. linsenförmigen Querschnitt. Durch beliebige Kombination unterschiedlicher geometrischer Ausgestaltungen der Perforationen wie kreisförmige Öffnungen und Schlitzen gegeneinander ergeben sich schallwirksame Öffnungen in nahezu beliebiger Gestalt.

Es zeigt sich also, daß eine Einstellung des Schallabsorptionsverhaltens auf diese Weise möglich ist, bei einer rohrförmigen Rohrleitung 1 etwa durch Drehen zweier ineinander angeordneter und/oder Längsverschieben längs der Rohrachse.

Gemäß der vorliegenden Erfindung wird somit eine gasdurchströmte Leitung mit Schallabsorptionwirkung geschaffen, die auf Grund ihres gegenüber einer üblichen Leitung nicht gesteigerten Platzbedarfs beispielsweise als Luftansaugschlauch eines Verbrennungsmotors Verwendung finden kann. Die Anwendung ist indessen nicht auf Fahrzeuge beschränkt, die Erfindung findet vielmehr überall Anwendung, wo geführte Gasströmungen schallgedämpft werden sollen.

## Patentansprüche

1. Gasdurchströmte Leitung mit Schallabsorptionswirkung,
bei der
die Wand (4) der Leitung (1) durchgehende Mikroperforierungen (2) mit einem Durchmesser von weniger als 1-2 mm sowie zweite Löcher (3) aufweist, deren freier Durchmesser wesentlich größer als der der Mikroperforationen (2), aber kleiner als etwa 5 mm ist.

2. Leitung nach Anspruch 1,
**dadurch gekennzeichnet,**
**daß** sie eine Rohrleitung (1) mit im wesentlichen kreisförmigen Querschnitt ist.

3. Leitung nach Anspruch 1 oder 2,
**dadurch gekennzeichnet,**
**daß** die freie Lochfläche der Mikroperforationen (2) maximal 10 % der Gesamtfläche der Wand (4) der Leitung (1) einnimmt.

4. Leitung nach einem der Ansprüche 1 bis 3,
**dadurch gekennzeichnet,**
**daß** die Mikroperforationen in etwa kreisförmige, durchgehende Löcher (2) mit einem Durchmesser in der Größenordnung von 0,45 mm aufweisen.

5. Leitung nach einem der Ansprüche 1 bis 4,
**dadurch gekennzeichnet,**
**daß** eine im wesentlichen konturfolgende Ummantelung (5) der Leitung (1) im Bereich der Mikroperforierungen (2) zumindest abschnittsweise vorgesehen ist.

6. Leitung nach Anspruch 5,
**dadurch gekennzeichnet,**
**daß** die Ummantelung (5) in kassettenartige Abschnitte (12, 12a, 12b, 12A) unterteilt ist.

7. Leitung nach Anspruch 6,
**gekennzeichnet durch** unterschiedliche Lochflächenmaße über zumindest die Längserstreckung des ummantelten Bereichs der Leitung (1) (Fig. 8B).

8. Leitung nach einem der Ansprüche 5 bis 7,
**dadurch gekennzeichnet,**
**daß** bei einer Leitung (1) mit Faltenbalgabschnitten (7) der Abstand der Ummantelung (5) von der Leitung (1) nicht die maximale Balgabmessung überschreitet, vorzugsweise in etwa dieser entspricht.

9. Leitung nach einem der Ansprüche 1 bis 8,
**dadurch gekennzeichnet,**
**daß** die Wand (4) aus mindestens zwei gegeneinander verschiebbaren perforierten Wandschichtteilen (4a, 4b) besteht, so daß durch Verschieben der Wandschichtteile (4a, 4b) gegeneinander die Öffnungsfläche der Gesamtperforierung (2) einstellbar ist.

10. Leitung der vorhergehenden Ansprüche,
**dadurch gekennzeichnet,**
**daß** sie aus einem Polymer-Kunststoff, Gummi oder gummiähnlichen Material oder aus Naturprodukten gebildet ist.

11. Leitung nach Anspruch 10,
**gekennzeichnet durch** abriebfeste Materialien.

12. Leitung nach Anspruch 10 oder 11 und Anspruch 9,
**gekennzeichnet durch** biegesteife Materialien.

13. Leitung nach einem der Ansprüche 2 bis 10,
**dadurch gekennzeichnet,**
**daß** sie als Luftansaugschlauch (1) eines Verbrennungsmotors ausgebildet ist.

14. Leitung nach einem der Ansprüche 2 bis 10,
**dadurch gekennzeichnet,**
**daß** sie als Luftansaugschlauch (1) eines Turboladers eines Verbrennungsmotors ausgebildet ist.

15. Leitung nach einem der Ansprüche 1 bis 10,
**dadurch gekennzeichnet,**
**daß** sie zur Schallabsorption von Frequenzen von mehr als 1000 Hz ausgebildet ist.

16. Leitung nach Anspruch 1,
**dadurch gekennzeichnet,**
**daß** sie mittels der zweiten Löcher (3) zur Schallabsorption von Frequenzen von mehr als 500 Hz ausgebildet ist.

17. Leitung nach einem der Ansprüche 1 bis 16,
**dadurch gekennzeichnet,**
**daß** die durchgehenden Mikroperforierungen (2) in flächigen Bereichen der Wand (4) der Leitung (1) vorgesehen sind.

18. Verfahren zur Herstellung einer gasdurchströmten Leitung nach einem der Ansprüche 1 bis 17, bei der die Wand (5) der Leitung (1) durchgehende Mikoperformungen (2) mit einem Durchmesser von weniger als 1-2 mm sowie zweite Löcher (3) aufweist, deren freier Durchmesser wesentlich größer als der der Mikroperforationen (2) oder kleiner als etwa 5mm, ist, **gekennzeichnet durch** den Schritt der Herstellung der Mikroperforationen **durch** Stanzen und/oder Bearbeitung mit einem Laserstrahl.

19. Verfahren nach Anspruch 18,
**dadurch gekennzeichnet,**
**daß** die Mikroperforationen (2) dadurch hergestellt werden, daß die Wand (4) der Leitung (1) aus mindestens zwei gegeneinander verschiebbaren Wandschichtteilen (4a, 4b) gebildet wird, wobei jeder Wandschichtteil (4a, 4b) Perforationen (2a, 2b) aufweist, und daß die Öffnungsfläche der Mikroperforationen durch Gegeneinanderverschieben der Wandschichtteile (4a, 4b) derart erfolgt, daß die jeweiligen Perforationen (2a, 2b) nur teilweise zueinander fluchten.

## Claims

1. Gas flow-through line with sound absorption effect, of which
the wall (4) of the line (1) has through-going microperforations (2) having a diameter of less than 1 - 2 mm and second holes (3), the free diameter of which is substantially greater than that of the microperforations (2), but smaller than about 5 mm.

2. Line according to claim 1,
**characterised in that**,
it is a pipeline (1) having a substantially circular cross-section.

3. Line according to claim 1 or 2,
**characterised in that**,
the free hole surface of the microperforations (2) takes up a maximum of 10% of the overall surface of the wall (4) of the line (1).

4. Line according to any of claims 1 to 3,
**characterised in that**,
the microperforations have approximately circular, through-going holes (2) having a diameter of the order of 0.45 mm.

5. Line according to any of claims 1 to 4,
**characterised in that**,
a substantially contour-following sheathing (5) of the line (1) is provided, at least in sections, in the region of the microperforations (2).

6. Line according to claim 5,
**characterised in that**,
the sheathing (5) is divided into coffer-like sections (12, 12a, 12b, 12A).

7. Line the according to claim 6,
**characterised by** different hole surface dimensions over at least the longitudinal extent of the sheathed region of the line (1) (Fig. 8B).

8. Line according to any of claims 5 to 7,
**characterised in that**,
with a line (1) having bellows sections (7), the spacing of the sheathing (5) from the line (1) does not exceed the maximum bellows dimension, preferably approximately corresponding thereto.

9. Line according to any of claims 1 to 8,
**characterised in that**,
the wall (4) consists of at least two perforated wall layer parts (4a, 4b), displaceable with respect to one another, so that by means of displacement of the wall layer parts (4a, 4b) with respect to one another, the opening surface of the overall perforation (2) can be set.

10. Line according to any preceding claim,
**characterised in that**,
it is formed of a polymer plastics, rubber or rubber-like material, or of natural products.

11. Line according to claim 10,
**characterised by** abrasion resistant materials.

12. Line according to claim 10 or 11 and claim 9,
**characterised by** bending resistant materials.

13. Line according to any of claims 2 to 10,
**characterised in that**,
it is formed as air suction hose (1) of an internal combustion engine.

14. Line according to any of claims 2 to 10,
**characterised in that**,
it is formed as air suction hose (1) of a turbocharger of an internal combustion engine.

15. Line according to any of claims 1 to 10,
**characterised in that**,
it is formed for sound absorption of frequencies of more than 1,000 Hz.

16. Line according to claim 1,
**characterised in that**,
it is formed, by means of the second holes (3), for sound absorption of frequencies of more than 500 Hz.

17. Line according to any of claims 1 to 16,
**characterised in that**,
the through-going microperforations (2) are provided in areal regions of the wall (4) of the line (1).

18. Method of manufacturing a gas flow-through line according to any of claims 1 to 17, of which the wall (4) of the line (1) has through-going microperforations (2) having a diameter of less than 1 - 2 mm and second holes (3), the free diameter of which is substantially greater than that of the microperforations (2), but smaller than about 5 mm,
**characterised by** the step of manufacturing the microperforations by means of stamping and/or working with a laser beam.

19. Method according to claim 18,
**characterised in that**,
the microperforations (2) are produced **in that** the wall (4) of the line (1) is formed of at least two wall layer parts (4a, 4b), displaceable with respect to one another, whereby each wall layer part (4a, 4b) has perforations (2a, 2b), and **in that** the opening surface of the microperforations is effected by means of mutual displacement of the wall layer parts (4a, 4b) such that the respective perforations (2a, 2b) align with.one another only in part.

## Revendications

1. Conduite traversée par un courant de gaz avec effet d'absorption phonique, dans laquelle la paroi (4) de la conduite (1) présente des micro-perforations (2) d'un diamètre inférieur à 1-2 mm ainsi que des deuxièmes trous (3) dont le diamètre libre est sensiblement supérieur à celui des micro-perforations (2), mais inférieur à environ 5 mm.

2. Conduite selon la revendication 1, **caractérisée en ce qu'**il s'agit d'un tuyau (1) de section sensiblement circulaire.

3. Conduite selon la revendication 1 ou 2, **caractérisée en ce que** la surface perforée libre des micro-perforations (2) occupe au maximum 10 % de la surface totale de la paroi (4) de la conduite (1).

4. Conduite selon l'une des revendications 1 à 3, **caractérisée en ce que** les micro-perforations présentent des trous (2) traversants, de forme circulaire, d'un diamètre d'un ordre de grandeur de 0,45 mm.

5. Conduite selon l'une des revendications 1 à 4, **caractérisée en ce qu'**un gainage (5) de la conduite (1), suivant sensiblement son contour, est prévu au moins par endroits dans la zone des micro-perforations (2).

6. Conduite selon la revendication 5, **caractérisée en ce que** le gainage (5) est divisé en tronçons (12, 12a, 12b, 12A) de type cassette.

7. Conduite selon la revendication 6, **caractérisée par** des dimensions différentes de la surface perforée sur au moins l'étendue longitudinale de la zone gainée de la conduite (1) (fig. 8B).

8. Conduite selon l'une des revendications 5 à 7, **caractérisée en ce que** dans le cas d'une conduite (1) avec des tronçons à soufflets (7), la distance entre le gainage (5) et la conduite (1) ne dépasse pas la dimension maximale des soufflets, correspond de préférence approximativement à celle-ci.

9. Conduite selon l'une des revendications 1 à 8, **caractérisée en ce que** la paroi (4) est constituée d'au moins deux parties stratifiées de paroi (4a, 4b) perforées pouvant coulisser l'une par rapport à l'autre, de sorte que par coulissement des parties stratifiées de paroi (4a, 4b) l'une par rapport à l'autre on peut régler la surface d'ouverture de la perforation totale (2).

10. Conduite selon les revendications précédentes, **caractérisée en ce qu'**elle est constituée d'une matière plastique polymère, de caoutchouc ou d'un matériau similaire au caoutchouc ou de produits naturels.

11. Conduite selon la revendication 10, **caractérisée par** des matériaux résistant à l'abrasion.

12. Conduite selon la revendication 10 ou 11 et la revendication 9, **caractérisée par** des matériaux rigides en flexion.

13. Conduite selon l'une des revendications 2 à 10, **caractérisée en ce qu'**elle est réalisée comme tuyau d'aspiration d'air (1) d'un moteur à combustion interne.

14. Conduite selon l'une des revendications 2 à 10, **caractérisée en ce qu'**elle est réalisée comme tuyau d'aspiration d'air (1) d'un turbocompresseur d'un moteur à combustion interne.

15. Conduite selon l'une des revendications 1 à 10, **caractérisée en ce qu'**elle est réalisée pour l'absorption phonique de fréquences supérieures à 1 000 MHz.

16. Conduite selon la revendication 1, **caractérisée en ce qu'**elle est réalisée au moyen des deuxièmes trous (3) pour l'absorption phonique de fréquences supérieures à 500 Hz.

17. Conduite selon l'une des revendications 1 à 16, **caractérisée en ce que** les micro-perforations (2) traversantes sont prévues dans des zones étendues de la paroi (4) de la conduite (1).

18. Procédé de fabrication d'une conduite traversée par un courant de gaz selon l'une des revendications 1 à 17 dans laquelle la paroi de la conduite (1) présente des micro-perforations (2) traversantes d'un diamètre inférieur à 1-2 mm ainsi que des deuxièmes trous (3) dont le diamètre libre est sensiblement supérieur à celui des micro-perforations (2) ou inférieur à environ 5 mm, **caractérisé par** l'étape de réalisation des micro-perforations par estampage et/ou usinage au moyen d'un rayon laser.

19. Procédé selon la revendication 18, **caractérisé en ce que** les micro-perforations (2) sont réalisées **en ce que** la paroi (4) de la conduite (1) est constituée d'au moins deux parties stratifiées de paroi (4a, 4b) pouvant coulisser l'une par rapport à l'autre, chaque partie stratifiée de paroi (4a, 4b) présentant des perforations (2a, 2b), et **en ce que** la surface d'ouverture des micro-perforations est réalisée par coulissement des parties stratifiées de paroi (4a, 4b) l'une par rapport à l'autre, de manière que les perforations (2a, 2b) respectives ne soient alignées qu'en partie les unes avec les autres.
